(19)

Europäisches
Patentamt

European
Patent Office

Office européen
des brevets

(11)  **EP 4 075 538 B1**

(12)  # EUROPEAN PATENT SPECIFICATION

(45) Date of publication and mention
of the grant of the patent:
**03.07.2024  Bulletin 2024/27**

(21) Application number: **20950928.0**

(22) Date of filing: **31.08.2020**

(51) International Patent Classification (IPC):
*H01M 4/13* $^{(2010.01)}$      *H01M 10/0525* $^{(2010.01)}$
*H01M 4/04* $^{(2006.01)}$      *H01M 4/1391* $^{(2010.01)}$
*H01M 4/36* $^{(2006.01)}$      *H01M 4/48* $^{(2010.01)}$
*H01M 4/505* $^{(2010.01)}$      *H01M 4/525* $^{(2010.01)}$

(52) Cooperative Patent Classification (CPC):
**H01M 4/364; H01M 4/0404; H01M 4/1391;
H01M 4/48; H01M 4/505; H01M 4/525;**
H01M 2220/20; Y02E 60/10

(86) International application number:
**PCT/CN2020/112703**

(87) International publication number:
**WO 2022/041259 (03.03.2022 Gazette 2022/09)**

(54)  **SECONDARY BATTERY AND PREPARATION METHOD THEREFOR, AND BATTERY MODULE,
BATTERY PACK AND APPARATUS CONTAINING SECONDARY BATTERY**

SEKUNDÄRBATTERIE UND HERSTELLUNGSVERFAHREN DAFÜR SOWIE BATTERIEMODUL,
BATTERIEPACK UND VORRICHTUNG MIT DER SEKUNDÄRBATTERIE

BATTERIE SECONDAIRE ET SON PROCÉDÉ DE PRÉPARATION, ET MODULE DE BATTERIE,
BLOC-BATTERIE ET APPAREIL CONTENANT LA BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2022  Bulletin 2022/42**

(73) Proprietor: **Contemporary Amperex Technology
Co., Limited
Ningde City, Fujian PRC 352100 (CN)**

(72) Inventors:
• **LIU, Qian
Ningde City, Fujian 352100 (CN)**
• **HU, Xia
Ningde City, Fujian 352100 (CN)**
• **LI, Quanguo
Ningde City , Fujian 352100 (CN)**
• **YE, Yonghuang
Ningde City, Fujian 352100 (CN)**
• **LI, Wei
Ningde City, Fujian 352100 (CN)**

(74) Representative: **von Tietzen und Hennig, Nikolaus
Lorenz Seidler Gossel
Rechtsanwälte Patentanwälte
Partnerschaft mbB
Widenmayerstraße 23
80538 München (DE)**

(56) References cited:
**WO-A1-2020/163522      CN-A- 102 117 913
CN-A- 104 300 123      CN-A- 105 185 987
CN-A- 110 176 579      CN-A- 111 446 488
US-B2- 9 306 214**

• **ZHENG LITUO ET AL: "All-Dry Synthesis of Single
Crystal NMC Cathode Materials for Li-Ion
Batteries", JOURNAL OF THE
ELECTROCHEMICAL SOCIETY, vol. 167, no. 13,
1 October 2020 (2020-10-01), page 130536,
XP093007509, ISSN: 0013-4651, DOI:
10.1149/1945-7111/abbcb1 Retrieved from the
Internet:
URL:https://iopscience.iop.org/article/10.
1149/1945-7111/abbcb1/pdf>**

**(Cont. next page)**

• **HAWLEY W BLAKE ET AL: "Lithium and transition metal dissolution due to aqueous processing in lithium-ion battery cathode active materials", JOURNAL OF POWER SOURCES, ELSEVIER, AMSTERDAM, NL, vol. 466, 8 May 2020 (2020-05-08), XP086177081, ISSN: 0378-7753, DOI: 10.1016/J.JPOWSOUR.2020.228315 [retrieved on 2020-05-08]**

• **HAWLEY W BLAKE ET AL: "Lithium and transition metal dissolution due to aqueous processing in lithium-ion battery cathode active materials", JOURNAL OF POWER SOURCES,**

**Description**

**TECHNICAL FIELD**

This application pertains to the technical field of energy storage apparatuses, and specifically relates to a secondary battery and a preparation method thereof, and a battery module, battery pack, and apparatus containing a secondary battery.

**BACKGROUND**

Secondary batteries are charged and discharged through interchangeable intercalation and de-intercalation of active ions between positive and negative electrodes, and have remarkable characteristics such as high discharge voltage, long cycle life, zero pollution, and zero memory effect. Therefore, as clean energy, secondary batteries have been gradually extended from use in electronic products to the field of large-sized apparatuses such as electro vehicles, to adapt to the sustainable development strategy for environment and energy.

Reference US 9,306,214 B2 discloses a secondary battery of the generic kind.

To further promote rapid popularization of the electromobiles, a secondary battery with relatively low direct current internal resistance under high energy density needs to be designed.

**SUMMARY**

To achieve the foregoing invention objective, a first aspect of this application provides a secondary battery, including a positive electrode plate, where the positive electrode plate includes a positive electrode current collector and a positive electrode film layer that is disposed on the positive electrode current collector and that includes a positive electrode active material, where the positive electrode active material includes a first material and a second material, the first material contains lithium transition metal oxide, the second material contains lithium transition metal phosphate, the lithium transition metal phosphate includes secondary particles formed by agglomeration of primary particles, and the second material has a lower discharge platform voltage than the first material with respect to a same type of counter electrode.

In the secondary battery in this application, the positive electrode plate includes a first material, and the first material contains lithium transition metal oxide and has a higher discharge platform voltage and gram capacity, so that the battery can release higher energy. In addition, the positive electrode plate is also combined with a second material, the second material contains lithium transition metal phosphate, the lithium transition metal phosphate includes secondary particles, the second material has a lower discharge platform voltage than the first material, and therefore, lower direct current internal resistance of the battery can be ensured during cycling, and particularly, the direct current internal resistance of the battery at low temperature or a low state of charge (State of charge, SOC) is more obviously increased.

In an embodiment, a particle size of the primary particles in the secondary particles of the lithium transition metal phosphate ranges from 30 nm to 800 nm, optionally 200 nm to 650 nm, and further optionally, 350 nm to 500 nm. The particle size of the primary particles in the secondary particles of the lithium transition metal phosphate is within an appropriate range, thereby further reducing the direct current internal resistance of the battery and reducing a volume swelling rate of the battery during cycling.

In an embodiment, morphology of the secondary particles of the lithium transition metal phosphate is spherical or spherical-like morphology. The secondary particles have proper morphology, so that a smooth electrolyte infiltration channel can be formed between the particles, thereby further reducing the direct current internal resistance of the battery during cycling.

According to the invention, a median particle size by volume $D_v50$ of the second material ranges from 4 $\mu$m to 10 $\mu$m, and optionally, 5 $\mu$m to 9 $\mu$m. Dv50 of the second material is within the foregoing range, thereby further increasing the direct current internal resistance of the battery and energy density of the battery.

In one embodiment, the first material has a discharge platform voltage ranging from 3.5 V to 4.2 V and optionally a discharge platform voltage ranging from 3.6 V to 3.8 V in a discharge curve at a discharge rate of 0.33C with respect to graphite. The first material has a higher discharge platform voltage, which helps increase the energy density of the battery.

In one embodiment, the second material has a discharge platform voltage ranging from 3.0 V to 4.0 V, optionally a discharge platform voltage ranging from 3.2 V to 3.7 V, and further optionally a discharge platform voltage ranging from 3.2 V to 3.5 V in a discharge curve at a discharge rate of 0.33C with respect to graphite. The discharge platform voltage of the second material is within the foregoing range, so that the battery can continue working at the discharge platform voltage of the second material for a period of time at the end of discharge (for example, below 40% SOC, 30% SOC, or 20% SOC), thereby further reducing the direct current internal resistance of the battery under the low SOC.

In one embodiment, a ratio W of a discharge platform capacity of the second material to a total discharge capacity of the positive electrode active material in a discharge curve of the positive electrode plate at the discharge rate of 0.33C with respect to a graphite counter electrode is $\leq$ 30%, optionally 2% $\leq$ W $\leq$ 15%, and further optionally, 3% $\leq$ W $\leq$ 8%. The positive electrode plate satisfies the foregoing condition, thereby ensuring that the battery has lower direct current internal resistance and further increasing the energy density of the battery. In addition, when the positive electrode plate satisfies the foregoing condition, a cycling swelling force growth rate of the battery can further be reduced, thereby prolonging the cycle life.

In one embodiment, the lithium transition metal phosphate is selected from one or more of $LiFePO_4$, $LiMnPO_4$, $LiMn_{1-z}Fe_zPO_4$, $Li_3V_2(PO_4)_3$, and their modified materials, and optionally includes one or more of $LiFePO_4$, $LiMn_{1-z}Fe_zPO_4$, and their modified materials, where 0 < z < 1, and optionally 0.05 $\leq$ z $\leq$ 0.5. When the lithium transition metal phosphate is selected from the foregoing substances, the lithium transition metal phosphate has a more stable crystal structure and can share the current during charging, thereby further improving a volume swelling rate of the battery during cycling and improving safety.

In one embodiment, the second material includes a composite material of the lithium transition metal phosphate and carbon, and a mass ratio of carbon in the composite material ranges from 0.8% to 2.0%, optionally from 1.0% to 1.7%, and further optionally from 1.4% to 1.6%. The composite material contains an appropriate amount of carbon, which helps improve electronic conductivity between the particles of the first material and the second material in the positive electrode plate, thereby further reducing the direct current internal resistance of the battery.

In one embodiment, the lithium transition metal oxide is selected from one or more of lithium transition metal oxides expressed by formula (I) and their modified materials;

$$Li_{1+x}Ni_aCo_bM_{1-a-b}O_{2-y}A_y \qquad (I)$$

where -0.1 $\leq$ x $\leq$ 0.2, 0.5 $\leq$ a < 0.95, 0 < b < 0.2, 0 < a + b < 1, and 0 $\leq$ y < 0.2, where M is selected from one or more of Mn, Fe, Cr, Ti, Zn, V, Al, W, Mg, B, Cu, Y, Si, Sr, Zr, and Ce, and A is selected from one or more of S, F, Cl, $PO_4^{3-}$, and I; and optionally, 0.5 $\leq$ a $\leq$ 0.7 and 0.01 $\leq$ b $\leq$ 0.15.

The lithium transition metal oxide is combined with the second material, so that the battery can have lower direct current internal resistance, thereby further increasing the energy density of the battery. Particularly, when a positive electrode in the secondary battery includes both the foregoing second material and lithium transition metal oxide containing 0.5 to 0.7 of Ni and 0.01 to 0.15 of Co, a problem of excessively high direct current internal resistance of the battery at low temperature and a low SOC can be significantly alleviated, thereby effectively prolonging the cycle life of the battery.

In one embodiment, the first material includes single particles. Optionally, a number percentage of the single particles in the first material is $\geq$ 70%, and further optionally ranges from 80% to 100%, or alternatively optionally, from 90% to 100%. When the number of single particles contained in the first material with the foregoing morphology is within the foregoing range, it can ensure that the battery has lower direct current internal resistance. This helps increase a working voltage of the battery, thereby increasing the energy density of the battery, and this can further reduce side reactions between the electrolyte and the material, thereby reducing the volume swelling rate of the battery during cycling.

In one embodiment, a median particle size by volume Dv50 of the first material ranges from 0.5 $\mu$m to 20 $\mu$m, optionally, from 2 $\mu$m to 15 $\mu$m, and further optionally, from 3 $\mu$m to 6 $\mu$m. Dv50 of the first material is within an appropriate range, which can increase the direct current internal resistance of the battery at the low SOC and can also reduce the volume swelling rate of the battery during cycling. In addition, the first material with an appropriate Dv50, which also helps increase the energy density of the battery.

In one embodiment, a median particle size by number $D_N10$ of the first material ranges from 0.2 $\mu$m to 5 $\mu$m, optionally, from 0.5 $\mu$m to 3 $\mu$m, and further optionally, from 0.5 $\mu$m to 0.8 $\mu$m. $D_N10$ of the first material is within an appropriate range, which helps keep the direct current internal resistance of the battery lower, thereby further improving gassing performance of the battery.

In one embodiment, median particle sizes by volume Dv99 and Dv10 of the first material satisfy 1 $\leq$ $D_V99/D_V10$ $\leq$ 10, and optionally, 3 $\leq$ $D_V99/D_V10$ $\leq$ 7. The particle size distribution of the first material satisfies the foregoing relationship, thereby further increasing the direct current internal resistance of the battery and the energy density of the battery. In addition, the first material includes a smaller amount of small particles, to help the battery obtain lower cycling swelling rate and good storage performance.

In one embodiment, a pH value of the first material ranges from 9 to 13, and optionally, from 10 to 12. The first material is properly alkaline, which can increase the direct current internal resistance of the battery and improve high-temperature storage performance of the battery.

In some embodiments, masses of the electrode plates in any two regions of a unit area in the positive electrode plate are mi and $m_2$ respectively, and satisfy:

$$\frac{\left|m_1 - m_2\right|}{m_1} \times 100\% \leq 0.1\%$$

.

The entire positive electrode plate has good uniformity, which can improve performance of each region of the positive electrode plate, thereby further increasing the direct current internal resistance of the battery and reducing the volume swelling rate of the battery during cycling.

A second aspect of the application provides a preparation method of a secondary battery, including following steps for preparing a positive electrode plate: providing a positive electrode active material, where the positive electrode active material includes a first material and a second material, the first material contains lithium transition metal oxide, the second material contains lithium transition metal phosphate, the lithium transition metal phosphate includes secondary particles formed by agglomeration of primary particles, and the second material has a lower discharge platform voltage than the first material with respect to a same type of counter electrode; forming the positive electrode active material into a positive electrode slurry; and applying the positive electrode slurry onto a positive electrode current collector to form a positive electrode film layer, to obtain the positive electrode plate. A median particle size by volume $D_v50$ of the second material ranges from 4 $\mu$m to 10 $\mu$m.

In the preparation method provided in this application, the positive electrode plate in the secondary battery includes a first material and a second material, the first material contains the lithium transition metal oxide, the second material contains lithium transition metal phosphate, the lithium transition metal phosphate includes secondary particles, the second material has a lower discharge platform voltage than the first material, therefore the direct current internal resistance of the battery can be greatly reduced under high energy density of the battery, and particularly, the direct current internal resistance of the battery at low temperature or a low SOC is more obviously increased.

In one embodiment, viscosity of the positive electrode slurry ranges from 3000 mPa s to 30000 mPa·s, and optionally from 6000 mPa·s to 15000 mPa·s. The viscosity of the positive electrode slurry is within the foregoing range, thereby improving processing efficiency and electrochemical performance of the secondary battery.

In one embodiment, the positive electrode slurry is left standing for 48 hours during which no or almost no gelation, delamination, or sedimentation occurs. The positive electrode slurry has good stability, which facilitates preparation of an even positive electrode film layer.

A third aspect of this application provides a battery module, including the secondary battery in the first aspect of this application, or the secondary battery obtained in the preparation method in the second aspect of this application.

A fourth aspect of this application provides a battery pack, including the secondary battery in the first aspect of this application or the battery module in the third aspect of this application.

A fifth aspect of this application provides an apparatus, including at least one of the secondary battery in the first aspect of this application, the battery module in the third aspect of this application, or the battery pack in the fourth aspect of this application.

The battery module, the battery pack, and the apparatus provided in this application include the secondary battery in this application, and therefore have at least the same advantages as the secondary battery.

## BRIEF DESCRIPTION OF DRAWINGS

FIG. 1 is a schematic diagram of an embodiment of a secondary battery.
FIG. 2 is an exploded view of FIG. 1.
FIG. 3 is a schematic diagram of an embodiment of a battery module.
FIG. 4 is a schematic diagram of an embodiment of a battery pack.
FIG. 5 is an exploded view of FIG. 4.
FIG. 6 is a schematic diagram of an embodiment of an apparatus using a secondary battery as a power source.
FIG. 7 is a schematic diagram of an embodiment of an apparatus for detecting swelling force of a secondary battery.
FIG. 8 is a schematic diagram of an embodiment of an apparatus for detecting swelling force of a secondary battery from another perspective.

## DESCRIPTION OF EMBODIMENTS

The secondary battery includes a positive electrode plate, a negative electrode plate, and an electrolyte. During charging and discharging of the battery, active ions are intercalated and deintercalated back and forth between the positive electrode plate and the negative electrode plate. The electrolyte has a function of conducting ions between the positive electrode plate and the negative electrode plate.

Positive electrode plate

In a secondary battery in this application, a positive electrode plate includes a positive electrode current collector and a positive electrode film layer that is disposed on the positive electrode current collector and that includes a positive electrode active material, where the positive electrode active material includes a first material and a second material, the first material contains lithium transition metal oxide, the second material contains lithium transition metal phosphate, the lithium transition metal phosphate includes secondary particles formed by agglomeration of primary particles, and the second material has a lower discharge platform voltage than the first material with respect to a same type of counter electrode.

In the second material, the secondary particle is a form of particles formed by agglomeration of a plurality of primary particles, where a particle size of the primary particles is < 1 micrometer ($\mu$m), or is, for example, $\leq$ 800 nanometers (nm).

A discharge platform voltage of the positive electrode active material has a well-known meaning in the art, and represents a voltage value corresponding to half of a discharge capacity of the positive electrode active material. The discharge platform voltage can be measured in a method well-known in the art. In a specific example, a to-be-tested positive electrode active material may be used to prepare the positive electrode plate, to form a tested battery with a counter electrode; and the tested battery is fully charged and then fully discharged within a charging/discharging voltage range, a change curve (also referred to as a discharge curve) of a discharge capacity of the battery with respect to a voltage is plotted, and a voltage corresponding to half of the discharge capacity is the discharge platform voltage.

In the test, the counter electrode may be an electrode well-known in the art and used as a negative electrode of the secondary battery. For example, the counter electrode may be a metal lithium sheet, a graphite electrode, or the like, or for another example, is a graphite counter electrode. For preparation of the positive electrode plate, the counter electrode, and the tested battery, reference is made to national standards or industry specifications. A test of the discharge platform voltage of the first material is used as an example for description. A first material, a conductive agent (for example, conductive carbon black, Super P), and a binder (for example, polyvinylidene fluoride PVDF) were dispersed in a solvent NMP at a mass ratio of 95:3:2, to form a positive electrode slurry; and the positive electrode slurry was applied onto a surface of a positive electrode current collector, aluminum foil, and subjected to drying and cold pressing, to obtain the positive electrode plate. The negative electrode active material (for example, graphite, which may be artificial graphite, natural graphite, or mixed graphite of artificial graphite and natural graphite), a conductive agent (for example, conductive carbon black, Super P), a binder (for example, styrene-butadiene rubber SBR), and a thickener (for example, sodium carboxymethyl cellulose CMC-Na) are dispersed in a solvent of deionized water at a mass ratio of 95:2:2:1, to form a negative electrode slurry; and the negative electrode slurry is applied onto a surface of the negative electrode current collector, copper foil, and subjected to drying and cold pressing, to obtain the negative electrode plate. The positive electrode plate, the negative electrode plate, and the separator are made into an electrode assembly through lamination or winding. The electrode assembly is placed in an outer package, and an electrolyte is added, to obtain the tested battery. Herein, the electrolyte commonly used in the art may be used. For example, ethylene carbonate EC and propylene carbonate PC of an equal volume are mixed evenly, and electrolyte lithium salt $LiPF_6$ is added, to obtain the electrolyte. A concentration of $LiPF_6$ in the electrolyte may be 1 mol/L. In a test of a discharge platform voltage of the second material, a tested battery is prepared in a method similar to that described above.

In the test, a charge/discharge voltage range is a characteristic of the battery itself, and for example, may be determined based on a type of the positive electrode active material. In an example, a charge/discharge scheme may be: At 25°C, the tested battery is charged to an upper cut-off voltage at a constant current rate of 0.33C, and then charged at a constant voltage until the current is $\leq$ 0.05C, and at this point, the battery is in a fully charged state (100% SOC); the battery is allowed to stand for 5 minutes, then the battery is discharged to a lower cut-off voltage at the constant current rate of 0.33C, and at that point, the battery is in a fully discharged state (0% SOC); and a discharge curve of the battery is plotted, to obtain the discharge platform voltage.

After extensive study, the inventor finds that, in the secondary battery in this application, the positive electrode plate includes a first material, and the first material contains lithium transition metal oxide and has a higher discharge platform voltage, so that the battery can release higher energy. In addition, the positive electrode plate is also combined with a second material, the second material contains lithium transition metal phosphate, the lithium transition metal phosphate includes secondary particles, the second material has a lower discharge platform voltage than the first material, and therefore, direct current internal resistance of the battery can be greatly reduced during cycling, and particularly, direct current internal resistance of the battery at low temperature or low SOC is more obviously increased. The foregoing low temperature ranges, for example, from -30°C to 10°C, or for another example, from -20°C to 0°C. The foregoing low SOC ranges, for example, from 2% SOC to 20% SOC, or for another example, from 5% SOC to 15% SOC.

Regardless of any theoretical limitation, the lithium transition metal phosphate includes secondary particles formed by agglomeration of primary particles, and therefore, not only a migration path of active lithium ions and electrons can be shortened, but also processability of the positive electrode slurry can be improved. This reduces an amount of binder used for the positive electrode film layer and forms a continuous stable migration network of ions and electrons, so that the entire positive electrode film layer can have good electronic conductivity and diffusivity for the active lithium ions, thereby reducing the direct current internal resistance of the battery. Particularly, at low temperature or low SOC, because the second material with secondary particle morphology still has higher ionic and electronic conductivity, in the positive electrode plate, the second material with the secondary particle morphology is disposed closely adjacent to the first material, so that the direct current internal resistance of the battery can still be kept at a low level even at low temperature or low SOC. In some embodiments, in the lithium transition metal phosphate, a number percentage of secondary particles is $\geq 80\%$, or for example, ranges from 90% to 100%.

In some embodiments, a particle size of the primary particles in the secondary particles of the lithium transition metal phosphate ranges from 30 nm to 800 nm, for example, from 100 nm to 500 nm, from 200 nm to 650 nm, from 300 nm to 550 nm, from 350 nm to 500 nm, or from 400 nm to 500 nm. The particle size of the primary particles in the secondary particles of the lithium transition metal phosphate is within an appropriate range, which can improve electron and ion migration performance of the particles and can also improve processability of the positive electrode slurry, so that an entire positive electrode film layer made of the positive electrode slurry has good electrical and ionic conductivity, thereby further reducing the direct current internal resistance of the battery and also reducing a volume swelling rate of the battery during cycling.

In any of the foregoing embodiments a median particle size by volume $D_v50$ of the second material ranges from 4 $\mu$m to 10 $\mu$m, for example, from 4 $\mu$m to 7 $\mu$m, from 5 $\mu$m to 9 $\mu$m, or from 5 $\mu$m to 8 $\mu$m. Dv50 of the second material is within an appropriate range, and therefore, migration paths of active lithium ions and electrons in particles of the first material and the second material are shorter, so that processability of the positive electrode slurry can be further improved and the positive electrode film layer also has higher compacted density, thereby further improving the direct current internal resistance of the battery and increasing the energy density of the battery.

In some embodiments, morphology of the secondary particles is spherical or spherical-like morphology. The secondary particles have proper morphology, so that a smooth electrolyte infiltration channel can be formed between the particles, to implement a good reaction interface in the positive electrode film layer, thereby further reducing the direct current internal resistance of the battery.

Regardless of any theoretical limitation, during charging of the battery, the second material can share a part of a current, to reduce charging polarization, thereby reducing the direct current internal resistance of the battery. During discharging, the battery can work stably within a specific SOC range at the discharge platform voltage of the second material, to alleviate an increase in the direct current internal resistance of the battery that is caused by a continuous decrease in a discharge voltage.

Because the secondary battery in this application has lower direct current internal resistance during cycling, the secondary battery can have a better large-current discharge capacity, and capacity exertion of the positive electrode active material can be improved, so that the battery can obtain higher energy density. In addition, cycle life of the battery can also be significantly prolonged.

In some embodiments, the first material has a discharge platform voltage ranging from 3.5 V to 4.2 V, for example, a discharge platform voltage ranging from 3.6 V to 3.8 V, from 3.7 V to 4.0 V, or from 3.7 V to 3.8 V in a discharge curve at a discharge rate of 0.33C with respect to graphite. The first material has a higher discharge platform voltage, so that the battery has a higher working voltage, thereby increasing the energy density of the battery. In the secondary battery in this application, the first material contains lithium transition metal oxide, and the lithium transition metal oxide generally has, for example, a charge/discharge voltage ranging from 2.5 V to 4.2 V, from 2.8 V to 4.4 V, from 2.8 V to 4.35 V, from 2.8 V to 4.3 V, or from 2.8 V to 4.25 V

In some embodiments, the second material has a discharge platform voltage ranging from 3.0 V to 4.0 V, for example, a discharge platform voltage ranging from 3.0 V to 3.5 V, from 3.0 V to 3.3 V, from 3.0 V to 3.25 V, from 3.15 V to 3.25 V, from 3.2 V to 3.3 V, from 3.2 V to 3.5 V, from 3.2 V to 3.7 V, or from 3.35 V to 3.45 V in a discharge curve at a discharge rate of 0.33C with respect to graphite. At a start of discharge, the first material mainly provides a high working voltage and a high capacity for the battery. At an end of discharge (for example, below 40% SOC, below 30% SOC, or below 20% SOC), the battery can continue working at the discharge platform voltage of the second material for a period of time, so that a voltage of the battery can be prevented from dropping rapidly, thereby further reducing the direct current internal resistance of the battery at the low SOC.

In some embodiments, the lithium transition metal phosphate is present in its composite material with carbon. The composite material of lithium transition metal phosphate and carbon can be a coating composite material or an intercalating composite material. The coating composite material is obtained by coating the surface of the lithium transition metal phosphate with a carbon coating layer. The intercalating composite material can be obtained by intercalating the lithium transition metal phosphate into a framework structure of a carbon material. The use of the composite material of the lithium transition metal phosphate and carbon can further improve conductivity of the positive electrode active material, thereby further reducing the direct current internal resistance of the battery.

In some embodiments, in the composite material of the lithium transition metal phosphate and carbon, a mass ratio of carbon ranges from 0.8% to 2.0%, for example, from 1.0% to 1.7%, from 1.4% to 1.6%, or from 1.45% to 1.55%. The composite material contains an appropriate amount of carbon, which helps improve electronic conductivity between the particles of the first material and the second material in the positive electrode plate, thereby further reducing the direct current internal resistance of the battery.

In some embodiments, the lithium transition metal phosphate may be selected from one or more of $LiFePO_4$, $LiMnPO_4$, $LiMn_{1-z}Fe_zPO_4$, $Li_3V_2(PO_4)_3$, and their modified materials. For example, the lithium transition metal phosphate includes one or more of $LiFePO_4$, $LiMnPO_4$, $LiMn_{1-z}Fe_zPO_4$, and their modified materials. For example, the lithium transition metal phosphate includes one or more of $LiFePO_4$, $LiMn_{1-z}Fe_zPO_4$, and their modified materials. Herein, $0 < z < 1$, and optionally $0.05 \leq z \leq 0.5$. When the lithium transition metal phosphate is selected from the foregoing substances, the lithium transition metal phosphate has a more stable crystal structure and can share the current during charging, so that an oxygen release problem of the first material (for example, a Ni- or Co-containing lithium transition metal oxide) having a high discharge voltage platform and side reactions on a surface of the electrolyte can be alleviated, thereby further increasing a volume swelling rate of the battery during cycling and improving safety.

In the context of this application, a "modified material" may refer to modifying a compound through doping or coating.

In the first material, the lithium transition metal oxide may include, but is not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium nickel cobalt tungsten oxide, and their modified compounds. For example, the lithium transition metal oxide may include one or more of lithium cobalt oxide, lithium nickel cobalt oxide, lithium nickel manganese oxide, lithium nickel cobalt manganese oxide, lithium nickel cobalt aluminum oxide, lithium nickel cobalt tungsten oxide, and their modified compounds. For another example, the lithium transition metal oxide may include one or more of lithium nickel cobalt manganese oxide, lithium nickel cobalt aluminum oxide, lithium nickel cobalt tungsten oxide, and their modified compounds. The lithium transition metal oxide has a higher discharge voltage and a higher gram capacity, which can increase the energy density of the battery.

In some embodiments, the lithium transition metal oxide is selected from one or more of lithium transition metal oxides $Li_{1+x}Ni_aCo_bM_{1-a-b}O_{2-y}A_y$ and their modified materials, where $-0.1 \leq x \leq 0.2$, $0.5 \leq a < 0.95$, $0 < b < 0.2$, $0 < a + b < 1$, $0 \leq y < 0.2$, M is selected from one or more of Mn, Fe, Cr, Ti, Zn, V, Al, W, Mg, B, Cu, Y, Si, Sr, Zr, and Ce, and A is selected from one or more of S, F, Cl, $PO_4^{3-}$, and I. The lithium transition metal oxide has a higher gram capacity, which can increase the energy density of the battery. An amount of rare resource cobalt contained in the lithium transition metal oxide is reduced. Because the second material is also mixed in the positive electrode active material, a decrease in kinetic performance and an increase in the direct current internal resistance caused by a decrease in a percentage of contained cobalt can be compensated for, so that the battery has a higher large-current charge/discharge capacity and higher cycling performance.

In some embodiments, for example, $0.5 \leq a \leq 0.8$, $0.6 \leq a \leq 0.8$, $0.7 \leq a \leq 0.8$, $0.6 \leq a \leq 0.7$, or $0.5 \leq a \leq 0.7$; for example, $0.01 \leq b \leq 0.15$; and for another example, $0.01 \leq b \leq 0.10$, $0.03 \leq b \leq 0.10$, $0.07 \leq b \leq 0.15$, $0.05 \leq b \leq 0.10$, or $0.05 \leq b \leq 0.07$. The lithium transition metal oxide has a higher gram capacity and higher structural stability, so that the battery has higher energy density, less cycling swelling, and longer cycle life. When a positive electrode in the secondary battery includes both the foregoing second material and lithium transition metal oxide containing 0.5 to 0.7 of Ni and 0.01 to 0.15 of Co, a problem of excessively high direct current internal resistance of the battery at low temperature and low SOC can be significantly alleviated, thereby effectively increasing the cycle life of the battery.

The use of appropriate M or A can further improve structural stability and increase a gram capacity of the lithium transition metal oxide. In some embodiments, M may include one or more of Mn, Al, W, Mg, B, Zr, and Ce. For example, M may include one or more of Mn, Al, and W. In some embodiments, A may include F.

In some embodiments, the first material includes single particles. In the first material in this application, single particles are discrete primary particles, or a form of particles formed by agglomeration of a small number of (for example, 2 to 5) primary particles. In some embodiments, a particle size of primary particles in the single particle is $\geq 1$ μm. The first material with single-particle morphology has higher stability, is unbreakable, and has a smaller specific surface area at a high voltage, to help increase a working voltage of the battery, so that the energy density of the battery is increased and side reactions between electrolyte and the material can be further reduced, thereby reducing the volume swelling rate of the battery during cycling.

In some embodiments, a number percentage of the single particles in the first material is $\geq 70\%$, or for example, ranges from 80% to 100%, from 85% to 100%, or from 90% to 100%. The number percentage of the single particles in the first material is higher, which can further increase the energy density of the battery and reduce the volume swelling rate of the battery during cycling.

In some embodiments, a number percentage of the single particles in the first material ranges from 70% to 97%, from 85% to 95%, or from 80% to 90%. The first material also contains an appropriate amount of secondary particles, which can further increase the compacted density of the positive electrode plate and further effectively shorten a migration path of active lithium ions and electrons between particles of the first material and the second material while increasing the energy density of the battery, thereby further increasing the direct current internal resistance of the battery. In the first material, the secondary particle is a form of particles formed by agglomeration of primary particles, and has a greater number of primary particles compared with single particles in the first material. In some examples, in the secondary particles of the first material, a particle size of the primary particles is < 1 $\mu$m, or for example, ranges from 200 nm to 900 nm, or from 300 nm to 800 nm.

In some embodiments, a median particle size by volume Dv50 of the first material ranges from 0.5 $\mu$m to 20 $\mu$m, or for example, from 2 $\mu$m to 15 $\mu$m, from 2.5 $\mu$m to 10 $\mu$m, from 3 $\mu$m to 8 $\mu$m, or from 3 $\mu$m to 6 $\mu$m. Dv50 of the first material is within an appropriate range, which can improve ionic and electronic conductivity of the active material in the positive electrode plate, increase the direct current internal resistance of the battery at the low SOC, and can also reduce side reactions between the material and the electrolyte, thereby reducing gas volume and reducing the volume swelling rate of the battery during cycling. In addition, the first material has appropriate Dv50, so that the positive electrode film layer has higher compacted density, thereby increasing the energy density of the battery.

In some embodiments, a median particle size by number $D_N10$ of the first material ranges from 0.2 $\mu$m to 5 $\mu$m, or for example, from 0.5 $\mu$m to 3 $\mu$m, from 0.3 $\mu$m to 2 $\mu$m, from 0.4 $\mu$m to 1 $\mu$m, or from 0.5 $\mu$m to 0.8 $\mu$m. $D_N10$ of the first material is within an appropriate range, so that the direct current internal resistance of the battery is lower and an amount of micropowder contained in the first material is further reduced, thereby suppressing side reactions between the electrolyte and the first material and improving gassing performance of the battery. In addition, the positive electrode slurry using the first material has higher stability, which improves processability of the positive electrode material and helps increase compacted density of the positive electrode film layer, thereby increasing the energy density of the battery.

In some embodiments, median particle sizes by volume Dv99 and $D_V10$ of the first material satisfy $1 \leq D_V99/D_V10 \leq 10$, for example, $3 \leq D_V99/D_V10 \leq 7$, $4 \leq D_V99/D_V10 \leq 8$, or $5 \leq D_V99/D_V10 \leq 7$. The particle size distribution of the first material satisfies the foregoing relationship, and particles of the positive electrode material have good lamination performance, so that particles of the first material and the second material have higher ion and electron migration performance, the positive electrode film layer has higher compacted density, a smoother electrolyte infiltration channel is formed, thereby further increasing the direct current internal resistance of the battery and increasing the energy density of the battery. In addition, the first material includes a smaller amount of small particles, which helps reduce gassing volume in the battery, to obtain lower cycling swelling rate and good storage performance.

In some embodiments, a pH value of the first material ranges from 9 to 13, for example, from 10 to 12, or from 11 to 13. The first material is alkaline, which can neutralize an acidic by-product such as HF generated in the battery, to reduce precipitation of transition metal ions (for example, Fe) of the second material, so that stability of the positive electrode active material is improved and impact of precipitated metal on stability of the negative electrode is further reduced, thereby increasing the direct current internal resistance of the battery. The pH value of the first material is within an appropriate range, so that the positive electrode slurry can also have higher processability, and gassing volume caused by decomposition of an impurity on a surface of the first material is reduced, thereby improving low-gassing performance and high-temperature storage performance of the battery.

In some embodiments, a ratio W of a discharge platform capacity of the second material to a total discharge capacity of the positive electrode active material in a discharge curve of the positive electrode plate at the discharge rate of 0.33C with respect to a graphite counter electrode is $\leq 30\%$, for example, $1\% \leq W \leq 30\%$, $2\% \leq W \leq 15\%$, $3\% \leq W \leq 10\%$, $3\% \leq W \leq 8\%$, or $4\% \leq W \leq 7\%$.

In this application, a type of the first material, a type of the second material, and a ratio of the first material to the second material may be adjusted to control W within a required range.

In this application, graphite may be used as the negative electrode active material to prepare the negative electrode plate in the foregoing method, and the positive electrode plate and the negative electrode plate are used to prepare the to-be-tested battery. The to-be-tested battery is tested in the foregoing charge/discharge scheme to obtain a discharge curve, a discharge capacity corresponding to a discharge platform voltage of the second material in the discharge curve is obtained, and a ratio of the capacity to a total discharge capacity of the positive electrode active material is calculated.

In the secondary battery in this application, the positive electrode plate satisfies the foregoing condition, the first material and the second material in the positive electrode active material are properly matched, and can also have good processability of the positive electrode slurry, to increase the compacted density of the positive electrode film layer and form good ionic and electronic conductivity between the particles, so that the second material is exerted to greater extent to increase the direct current internal resistance of the battery and a high-discharge voltage characteristic of the first material is effectively exerted, thereby ensuring that the battery has higher energy density. The second material can also improve overall stability of the positive electrode active material, and reduce a volume swelling rate of the battery during cycling, and thereby prolonging the cycle life.

In some embodiments, any two regions of a unit area in the positive electrode plate are separately denoted as a first region and a second region, a mass of the electrode plate in the first region is mi, and a mass of the electrode plate in the second region is $m_2$, satisfying:

$$\frac{|m_1 - m_2|}{m_1} \times 100\% \leq 0.1\%$$

.

The entire positive electrode plate has good uniformity, which can improve electrochemical performance of each region of the positive electrode plate, thereby further reducing the direct current internal resistance of the battery and reducing the volume swelling rate of the battery during cycling.

In the secondary battery in this application, the positive electrode film layer usually includes the positive electrode active material and an optional binder and an optional conductive agent, and is usually formed after a positive electrode slurry is applied, following by drying and cold-pressing. The positive electrode slurry is usually formed by dispersing the positive electrode active material, the optional conductive agent, the optional binder and the like in a solvent and stirring them evenly. The solvent may be N-methylpyrrolidone (NMP).

For example, the binder used for the positive electrode film layer may include one or more of polyvinylidene fluoride (PVDF) and polytetrafluoroethylene (PTFE).

For example, the conductive agent used for the positive electrode film layer may include one or more of superconducting carbon, carbon black (for example, acetylene black or Ketjen black), carbon dots, carbon nanotubes, graphene, and carbon nanofibers.

In the secondary battery in this application, the positive electrode current collector can use metal foil or a composite current collector (a metal material can be disposed on a polymer substrate to form the composite current collector). For example, the positive electrode current collector can use aluminum foil.

In this application, morphology (single particles or secondary particles) of the positive electrode active material is tested as follows: A first material is laid and pasted on a conductive adhesive to prepare a sample under test having a length of 6 cm and a width of 1.1 cm; and morphology of particles in the sample under test is tested by using a scanning electron microscope and an energy disperse spectroscopy (for example, ZEISS Sigma 300). For the test, reference is made to JY/T010-1996. In order to ensure accuracy of a test result, 10 different regions in the sample under test may be randomly selected for a scanning test, and under 5000x magnification, based on a particle morphology characteristic, number ratios of single particles in the tested regions are collected, and an average is calculated, that is, a number percentage of the single particles in the first material. Similarly, a number percentage of the secondary particles in the second material may be tested.

In this application, the particle size of the primary particles in the secondary particles is determined as follows: Dry second material powder is taken and dispersed on a conductive silver paint or conductive paper, and then put under a field emission scanning electron microscope (for example, ZEISS Sigma 300). an electron beam beats on a sample surface, and a detector receives excited secondary electrons or a backscattered electron signal and generates a grayscale image, to obtain a scanning electron microscope image showing surface morphology of the particles. On the scanning electron microscope image, the particle sizes of the primary particles are collected in a long-diameter statistical method (a maximum measurable diameter of a single primary particle in the SEM image is defined as the particle size of the primary particle). Particle sizes of the primary particles in at least 10 regions are measured for each group of samples, and an average of particle sizes of primary particles in three groups of samples is calculated, that is, the particle size of the primary particle in the lithium transition metal phosphate.

In this application, Dv10, Dv50, Dv90, Dv99, and $D_N10$ of the positive electrode active material are determined using a laser particle size analyzer according to the following test method: A sample under test is evenly dispersed in a dispersion medium (for example, water, ethanol, or NMP; or for another example, water), and is tested by using a laser particle size analyzer (for example, Malvern Master Size 3000). To achieve uniform dispersion, the sample may be properly subjected to ultrasound treatment before being tested. For the test, reference is made to GB/T 19077.1-2016. In these terms:

$D_V10$ represents a corresponding particle size when a cumulative volume distribution percentage of the positive electrode active material reaches 10%;

$D_V50$ represents a corresponding particle size when a cumulative volume distribution percentage of the positive electrode active material reaches 50%;

$D_V90$ represents a corresponding particle size when a cumulative volume distribution percentage of the positive electrode active material reaches 90%;

$D_v99$ represents a corresponding particle size when a cumulative volume distribution percentage of the positive electrode active material reaches 99%; and

$D_N10$ represents a corresponding particle size when a cumulative number distribution percentage of the positive electrode active material reaches 10%.

In this application, a carbon content of the second material has a meaning well-known in the art, and is tested in a method where a carbon and sulfur analyzer (for example, HCS-140 from Shanghai Dekai Instrument Co., Ltd.) is used. The test method is as follows: A second material sample is burned under oxygen to convert carbon into $CO_2$; after entering an absorption cell, a combustion product is converted into a corresponding signal by a detector; the signal is sampled by using a computer and converted into a value in direct proportional to a concentration of $CO_2$ after linear correction; values in an entire analysis procedure are accumulated; and after the analysis, the accumulative sum is divided by mass and then multiplied by a correction coefficient; and a blank is deducted to obtain the carbon content of the sample.

In this application, a pH value of the first material is tested in a method as follows. For example, a pH meter (for example, Raymagnetic PHS-3C) may be used. An appropriate amount of sample under test is mixed with deionized water at a fixed ratio (for example, a mass ratio of 1:9), stirred for 30 minutes, and left standing for 1.5 hours at constant temperature of 25°C to obtain a to-be-tested solution; and a pH calibration solution is also left standing at constant temperature of 25°C. An electrode is rinsed with deionized water (or referred to as DI water); water on the electrode is removed with airlaid paper; a calibration solution (pH = 6.86) is used for calibration and confirmation, then the electrode is rinsed again in accordance with the foregoing step, then calibration solutions (pH = 4.00, 9.18, and 12.00) are used for slope confirmation and calibration, and the electrode is rinsed. A supernatant of the to-be-tested solution is collected, and a pH value of the supernatant is measured for three times at constant temperature of 25°C by using a Raymagnetic PHS-3C pH meter and an E-201-C glass electrode, and an average of the three measured pH values is calculated, that is, a pH value of the first material.

In this application, element composition of the positive electrode active material is tested as follows. An inductively coupled plasma optical emission spectrometer (for example, iCAP 7400 from THERMO SCIENTIFIC) may be used to measure an amount of Li, Fe, P, Ni, Co, Mn, and other metal elements contained in the to-be-tested sample.

Negative electrode plate

In the secondary battery in this application, the negative electrode plate includes a negative electrode current collector and a negative electrode film layer disposed on at least one surface of the negative electrode current collector.

In the negative electrode plate in this application, the negative electrode current collector can use metal foil or a composite current collector (a metal material can be disposed on a polymer substrate to form the composite current collector). For example, the negative electrode current collector can use copper foil.

The negative electrode film layer usually includes a negative electrode active material, an optional binder, an optional conductive agent, and other optional additives. The negative electrode film layer is usually formed by applying a negative electrode slurry onto the negative electrode current collector, and then followed by drying, and cold-pressing. The negative electrode slurry is usually formed by dispersing the negative electrode active material, the optional conductive agent, the optional binder, the optional binder, and the like in a solvent and stirring them evenly. The solvent may be N-methylpyrrolidone (NMP) or deionized water.

In some embodiments, the negative electrode active material may include one or more of artificial graphite, natural graphite, a silicon-based material, and a tin-based material. These negative electrode materials have a higher gram capacity, so that the secondary battery has higher energy density. Optionally, the negative electrode active material includes one or more of artificial graphite and natural graphite. A graphite material not only has a higher gram capacity, but also has higher ion and electron migration properties, higher cycling stability, and lower cycling swelling rate, so that the secondary battery has higher energy density and cycling performance.

In some embodiments, the negative electrode film layer includes the conductive agent. The conductive agent can improve conductivity of the negative electrode plate. In an example, the conductive agent may include one or more of superconducting carbon, carbon black (for example, Super P, acetylene black, or Ketjen black), carbon dots, carbon nanotubes, graphene, and carbon nanofibers.

In some embodiments, the negative electrode film layer includes a binder. The binder firmly binds the negative electrode active material, the optional conductive agent, and the like to the negative electrode current collector. In an example, the binder may include one or one of styrene-butadiene rubber (SBR), water-borne acrylic resin, polyvinyl alcohol (PVA), sodium alginate (SA), and carboxymethyl chitosan (CMCS).

In some embodiments, the negative electrode film layer may also include another optional additive to improve performance of the negative electrode film layer. The another optional additive is, for example, a thickener (for example, sodium carboxymethyl cellulose CMC-Na), a PTC thermistor material, and the like.

## Separator

The separator is disposed between the positive electrode plate and the negative electrode plate for isolation. A type of the separator is not particularly limited for the secondary battery in this application, and any well-known separator with a porous structure used for the secondary battery may be selected. For example, the separator may be selected from one or more of a glass fiber film, a non-woven film, a polyethylene film, a polypropylene film, a polyvinylidene fluoride film, and a multilayer composite film including one or more of them.

## Electrolyte

The electrolyte has a function of migrating ions in a secondary battery. In the secondary battery of this application, the electrolyte may be a solid electrolyte film, or a liquid electrolyte (namely, the electrolyte). In some embodiments, the electrolyte is the liquid electrolyte. The electrolyte includes an electrolyte lithium salt, a solvent, and an optional additive.

In some embodiments, the lithium salt may be selected from one or more of $LiPF_6$ (lithium hexafluorophosphate), $LiBF_4$ (lithium tetrafluoroborate), $LiClO_4$ (lithium perchlorate), $LiAsF_6$ (lithium hexafluoroarsenate), LiFSI (lithium bisfluorosulfonimide), LiTFSI (lithium bistrifluoromethanesulfonimidate), LiTFS (lithium trifluoromethanesulfonate), LiDFOB (lithium difluoro (oxalato) borate), LiBOB (lithium bis(oxalato) borate), $LiPO_2F_2$ (lithium difluorophosphate), LiDFOP (lithium difluoro bis(oxalato) phosphate), and LiTFOP (lithium tetrafluoro oxalato phosphate).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), tetramethylene sulfone (SF), methyl sulfone (MSM), ethyl methanesulfonate (EMS), and diethyl sulfone (ESE).

In some embodiments, the additive optionally includes a negative electrode film-forming additive, and further optionally includes a positive electrode film-forming additive, and further optionally includes an additive capable of improving some performance of a battery, for example, an additive for improving over-charge performance of the battery, an additive for improving high-temperature performance of the battery, and an additive for improving low-temperature performance of the battery.

In the secondary battery in this application, the positive electrode plate, the negative electrode plate, and the separator may be made into an electrode assembly through lamination or winding, and the separator is disposed between the positive electrode plate and the negative electrode plate for isolation.

The secondary battery in this application may include an outer package. The outer package is configured to package the electrode assembly and the electrolyte.

In some embodiments, the outer package may be a hard shell, for example, a hard plastic shell, an aluminum shell, or a steel shell. The outer package may alternatively be a soft package, for example, a soft bag. A material of the soft package may be plastic, for example, may include one or more of polypropylene (PP), polybutylene terephthalate (PBT), polybutylene succinate (PBS), and the like.

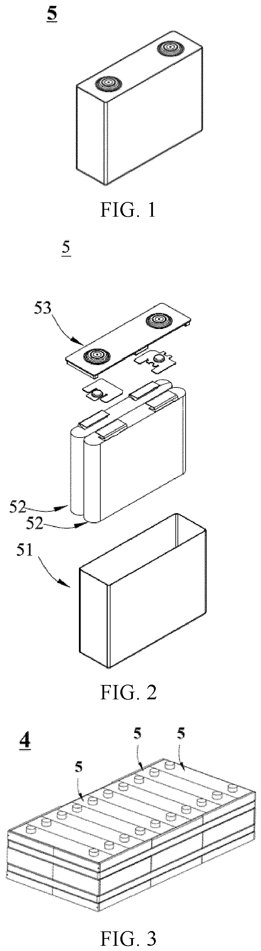

This application does not impose a special limitation on a shape of the secondary battery, and the lithium-ion battery may be cylinder-shaped, prism-shaped, or in any other shape. FIG. 1 shows a secondary battery 5 of a square structure as an example. As shown in FIG. 2, the outer package may include a housing 51 and a cover plate 53. The housing 51 may include a base plate and a side plate connected onto the base plate, and the base plate and the side plate enclose an accommodating cavity. The housing 51 has an opening connected to the accommodating cavity, and the cover plate 53 can cover the opening to seal the accommodating cavity. The electrode assembly 52 is packaged in the accommodating cavity. The electrolyte infiltrates the electrode assembly 52. There may be one or more electrode assemblies 52 in the secondary battery 5, and the quantity may be adjusted as required.

In some embodiments, secondary batteries may be assembled into a battery module, and the battery module may include a plurality of secondary batteries. The specific quantity may be adjusted based on application and capacity of the battery module.

FIG. 3 shows a battery module 4 used as an example. As shown in FIG. 3, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, battery modules may be further assembled into a battery pack, and a quantity of battery modules included in the battery pack may be adjusted based on application and capacity of the battery pack.

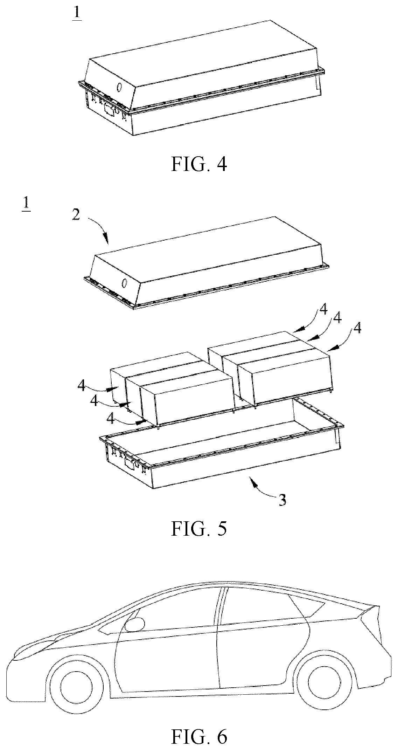

FIG. 4 and FIG. 5 show a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form enclosed space for accommodating the battery modules 4. The plurality of battery modules 4 may be arranged in the battery box in any manner.

This application further provides a preparation method of a secondary battery. The preparation method includes steps of preparing a positive electrode plate: providing a positive electrode active material, where the positive electrode active material includes a first material and a second material, the first material contains lithium transition metal oxide, the second material contains lithium transition metal phosphate, the lithium transition metal phosphate includes secondary particles formed by agglomeration of primary particles, and the second material has a lower discharge platform voltage than the first material with respect to a same type of counter electrode; forming the positive electrode active material into a positive electrode slurry; and applying the positive electrode slurry onto a positive electrode current collector to form a positive electrode film layer, to obtain the positive electrode plate.

In the foregoing preparation method, the first material and the second material may be the materials described herein.

In some embodiments, the positive electrode active material, the optional conductive agent, and the optional binder can be dispersed in a solvent (for example, N-methylpyrrolidone NMP), and stirred evenly to form the positive electrode slurry. Then the positive electrode slurry can be applied onto at least one surface of the positive electrode current collector in a coating method well-known in the art. A positive electrode slurry coating layer is dried and cold pressed to form a positive electrode film layer to obtain the positive electrode plate.

In some embodiments, viscosity of the positive electrode slurry ranges from 3000 mPa s to 30000 mPa s, for example, from 3000 mPa s to 20000 mPa s, from 4000 mPa's to 15000 mPa·s, from 6000 mPa·s to 15000 mPa s, or from 6000 mPa s to 10000 mPa s. The viscosity of the positive electrode slurry is within the foregoing range, so that processability of the slurry and the film layer can be improved, thereby improving processing efficiency and electrochemical performance of the secondary battery.

In some embodiments, the positive electrode slurry is left standing for 48 hours during which no or almost no gelation, delamination, or sedimentation occurs. Herein, the slurry can be scooped up (by using, for example, a stainless steel ruler or a stainless steel plate), and the slurry flows down naturally. If it is determined, through visual observation, that the slurry continuously flows and that there is no agglomerate in the slurry, the slurry is not gelled. It can be determined, through visual observation, whether the positive electrode slurry is delaminated and sedimented. The positive electrode slurry has good stability, which facilitates preparation of an even positive electrode film layer.

The preparation method in this application may further include other well-known steps for preparing the secondary battery. Details are not described herein.

Except the preparation method of the positive electrode plate in this application, other construction and preparation methods of the secondary battery in this application are well-known. For example, the negative electrode plate in this application can be prepared in the following preparation method: The negative electrode active material and the optional conductive agent, the optional binder and another optional additive are mixed and then dispersed in a solvent (for example, NMP or deionized water), stirred evenly, then applied onto the negative electrode current collector, dried and cold pressed, to obtain the negative electrode plate.

In this application, materials such as the positive electrode active material and the negative electrode active material for preparing the secondary battery can be obtained commercially or prepared in a method known in the art. A person skilled in the art can make a proper choice according to an actual use need.

In some embodiments, the positive electrode plate, the negative electrode plate, the separator, and the electrolyte can be assembled into the secondary battery. In an example, the positive electrode plate, the separator, and the negative electrode plate can be wound or stacked to form the electrode assembly; and the electrode assembly is put in an outer package, and an electrolyte is injected, and then subjected to treatment such as vacuum packaging, standing, formation, and shaping to obtain the secondary battery.

A preferable technical feature of the secondary battery in this application are also applicable to the preparation method in this application, implementing corresponding beneficial effects.

This application further provides an apparatus. The apparatus includes at least one of the secondary battery, the battery module, or the battery pack in this application. The secondary battery, the battery module, or the battery pack may be used as a power source for the apparatus, or an energy storage unit of the apparatus. The apparatus may be, but is not limited to, a mobile device (for example, a mobile phone or a notebook computer), an electric vehicle (for example, a full electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the apparatus based on requirements for using the apparatus.

FIG. 6 shows an apparatus as an example. The apparatus is a full electric vehicle, a hybrid electric vehicle, a plug-in hybrid electric vehicle, or the like. To meet a requirement of the apparatus for high power and high energy density of a secondary battery, a battery pack or a battery module may be used.

In another example, the apparatus may be a mobile phone, a tablet computer, a notebook computer, or the like. The apparatus is usually required to be light and thin, and the secondary battery may be used as a power source.

**Examples**

Content disclosed in this application is described in detail in the following examples. These examples are intended only for illustrative purposes because various modifications and changes made without departing from the scope of the content disclosed in this application are apparent to those skilled in the art. Unless otherwise stated, all parts, percentages, and ratios reported in the following examples are based on mass, all reagents used in the embodiments are commercially available or synthesized in a conventional manner, and can be used directly without further treatment, and all instruments used in the embodiments are commercially available.

**I. Positive electrode active material**

A positive electrode active material applied to the following examples and comparative examples are commercially available.

1. First material:

NCM-1: $LiNi_{0.70}Co_{0.01}Mn_{0.29}O_2$
NCM-2: $LiNi_{0.70}Co_{0.15}Mn_{0.15}O_2$
NCM-3: $LiNi_{0.70}Co_{0.07}Mn_{0.23}O_2$
NCM-4: $LiNi_{0.70}Co_{0.05}Mn_{0.25}O_2$
NCA-1: $LiNi_{0.80}Co_{0.15}Al_{0.05}O_2$
NCW-1: $LiNi_{0.80}Co_{0.15}W_{0.05}O_2$

2. Second material:

Carbon coated $LiFePO_4$, LFP/C for short;
Carbon coated $LiMn_{0.5}Fe_{0.5}PO_4$, LMFP/C for short; and
Carbon coated $LiMnPO_4$, $LiMnPO_4$/C for short.

**II. Preparation of secondary battery**

**Example 1**

Preparation of positive electrode plate

A first material NCM-1 and a second material LFP/C were mixed to obtain a positive electrode active material; the positive electrode active material, a conductive agent conductive carbon black, and a binder polyvinylidene fluoride (PVDF) were mixed at a mass ratio of 95:3:2 in a solvent NMP and well stirred evenly to form an even positive electrode slurry. The positive electrode slurry was applied onto two side surfaces of aluminum foil of a positive electrode current collector, followed by drying and cold pressing, to obtain the positive electrode plate. Compacted density of the positive electrode film layer was 3.22 $g/cm^3$.

Preparation of negative electrode plate

A negative electrode active material artificial graphite, a conductive agent conductive carbon black, a binder styrene-butadiene rubber (SBR), a thickener sodium carboxymethyl cellulose (CMC-Na) were well stirred and mixed in a deionized water solvent at a mass ratio of 95:2:2:1, to form an even negative electrode slurry. The negative electrode slurry was applied onto two side surfaces of copper foil of a negative electrode current collector, followed by drying and cold pressing, to obtain the negative electrode plate. Compacted density of the negative electrode film layer was 1.5 $g/cm^3$.

Preparation of electrolyte

Ethylene carbonate EC and propylene carbonate PC of an equal volume were mixed evenly to obtain a solvent;

and then an electrolyte lithium salt $LiPF_6$ was dissolved in the solvent and mixed evenly, to obtain the electrolyte, where a concentration of $LiPF_6$ was 1 mol/L.

Preparation of secondary battery

The positive electrode plate, a porous polyethylene (PE) separator, and the negative electrode plate were stacked in order and then wound to obtain an electrode assembly; and the electrode assembly was put in an outer package of an aluminum hard shell, and the electrolyte was injected and then packaged, to obtain a secondary battery. A capacity of the secondary battery was 60 Ah. In a discharge curve of the secondary battery at 0.33C, a ratio W of a discharge platform capacity of the second material to a total discharge capacity of the positive electrode active material was equal to 5%.

**Examples 2 to 28 and Comparative Examples 1 to 4:** Preparation of the secondary battery was similar to that in Example 1, with a difference in that related preparation parameters of the positive electrode plate were adjusted, with details given in Table 1.

## III. Performance test

For the test, reference is made to GB/T 19596-2017, GB/T 31484-2015, GB/T 31485-2015, and GB/T 31486-2015.

1. Direct current internal resistance DCR test of batteries at 5% SOC

Testing an actual capacity $C_0$ of the secondary battery at 25°C includes: The battery was left standing for 2 hours, discharged to a lower cut-off voltage at a constant current at a rate of 0.33C (for details, refer to Table 2), and left standing for 10 minutes; and then the secondary battery was (1C indicated current intensity for completely discharging a nominal capacity of the secondary battery within 1 hour) charged at a constant current at 0.33C to an upper cut-off voltage of 4.35 V, then charged at a constant voltage until a current was < 0.05C, left standing for 10 minutes, and then discharged to the lower cut-off voltage at a constant current at 0.33C. An actual capacity was recorded as $C_0$.

Then, the battery was charged at a constant current at a rate of $0.33C_0$ to the upper cut-off voltage of 4.35 V, and then charged at a constant voltage until the current was < 0.05C; at that point, the battery was at 100% SOC and then was left standing for 10 minutes; and then the battery was discharged with a constant current at a rate of $0.33C_0$ to 5% SOC, and left standing for 10 minutes; temperature was adjusted to target test temperature, for example, 25°C or -20°C, the battery was left standing for 2 hours, where a discharge current was based on a pulse current satisfying that the lower cut-off voltage could be reached during 10 seconds of discharge at 25°C or -20°C; and the battery was left standing for 10 minutes to obtain DCR of the battery at 5% SOC, and that DCR was recorded as DCR@5% SOC.

DCR@5% SOC of the battery containing only the first material in this example was recorded as DCR0, DCR@5% SOC of the tested battery was recorded as DCR1, and direct current internal resistance DCR improvement ratio (%) of the battery at the 5% SOC = (DCR1 - DCR0)/DCR0 × 100%. DCR0 and DCR1 were measured under the same temperature.

2. Cycling swelling force growth rate test

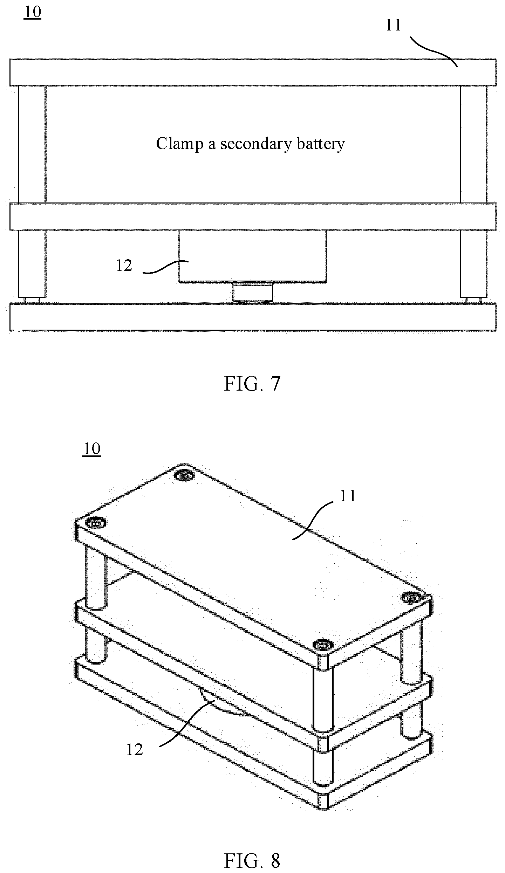

The cycling swelling force growth rate was obtained by dividing an average swelling force change $\Delta F$ by N, where $\Delta F$ was caused when a cycling charge/discharge capacity of the secondary battery dropped to 90% (that is, 90% SOH) of a nominal capacity (the number of cycles at that point was recorded as N) at 25°C at a rate of 0.33C within a range of the upper cut-off voltage of 4.35 V to the lower cut-off voltage (refer to Table 2) of the secondary battery, and $\Delta F$ was a change in pressure of the secondary battery detected by a sensor in a detection apparatus at the $N^{th}$ cycle of the secondary battery with respect to that at a start of cycling. Specifically, $\Delta F = F_N - F_0$, where $F_N$ represents pressure of the secondary battery (that is, swelling force of the secondary battery at that point) detected by the sensor of the detection apparatus after the $N^h$ cycle of the secondary battery, and $F_0$ represents pressure of the secondary battery (that is, swelling force of the secondary battery at that point) detected by the sensor of the detection apparatus at the start of cycling of the secondary battery. The swelling force of the secondary battery during cycling could be measured by using a method and an apparatus well-known in the art. For example, FIG. 7 and FIG. 8 show a detection apparatus 10. As shown in FIG. 7 and FIG. 8, the detection apparatus 10 includes a clamp assembly 11 and a pressure sensor 12. The clamp assembly 11 includes three steel plate clamps, the to-be-tested secondary battery is clamped between two clamps, and wide surfaces of the secondary battery are in a face-to-face contact with the steel plate clamps; and the pressure sensor 12 is clamped between another clamp and either of the foregoing two clamps, and the pressure sensor 12 is connected to a pressure collector (for example, a computer). Herein, a thickness of a steel plate is 30 mm.

The steel plates and a connection member between the steel plates may be made of steel 45, and further, a surface of the steel plate may be coated with chrome. A diameter of a pretensioner between the steel plates is optionally 15 mm. An area of a rectangle enclosed by straight lines between pretensioners at four corners of the clamp should be greater than or equal to an area of the wide surface of the secondary battery. Pre-tightening force was applied onto the to-be-tested secondary battery through the steel plate clamps (for example, when the secondary battery was a hard shell battery, 3 kN pre-tightening force could be selected; or when the secondary battery was a pouch-type battery, 1 kN pre-tightening force could be selected), and was maintained throughout a test procedure, and the pre-tightening force was recorded as initial swelling force $F_0$ of the to-be-tested secondary battery. To apply more even force onto the secondary battery and the pressure sensor, the secondary battery and the pressure sensor could be clamped in the center of the clamps, and the pretensioners (for example, screws) at the four corners of the clamps were fastened alternately diagonally, and finally, the pretensioners at the four corners were fine tuned to achieve required pre-tightening force. Then, the secondary battery was charged at a constant current at 0.33C to the upper cut-off voltage at ambient temperature set to 25°C, then charged at a constant voltage until a current was less than 0.05C, left standing for 10 minutes, and then discharged at a constant current at 0.33C to the lower cut-off voltage, and this was denoted as a cycle. The secondary battery was charged and discharged cyclically in this way, and a discharge capacity and swelling force of the secondary battery were monitored in real time until the discharge capacity of the battery attenuated to 90% of the nominal capacity. Finally, a cycling swelling force growth rate of the secondary battery was calculated according to $\Delta F/N$.

For a test result, refer to Table 2.

**Table 1**

| Number | First material | | | | | | Second material | | | | | | W |
| | Type | Dv50 (μm) | Dv99/Dv10 | DN10 (μm) | Ratio of single particles | U1 (V) | Type | Ratio of secondary particles | Particle size of primary particles (nm) | Dv50 (μm) | Carbon content (wt%) | U2 (V) | |
|---|---|---|---|---|---|---|---|---|---|---|---|---|---|
| Example 1 | NCM-1 | 3.7 | 4.2 | 0.65 | 90% | 3.77 | LFP/C | 100% | 350 | 5.8 | 1.47 | 3.22 | 5% |
| Example 2 | NCM-2 | 3.7 | 4.2 | 0.65 | 90% | 3.75 | LFP/C | 100% | 350 | 5.8 | 1.47 | 3.22 | 5% |
| Example 3 | NCM-3 | 3.7 | 4.2 | 0.65 | 90% | 3.75 | LFP/C | 100% | 350 | 5.8 | 1.47 | 3.22 | 5% |
| Example 4 | NCM-4 | 3.7 | 4.2 | 0.65 | 90% | 3.76 | LFP/C | 100% | 350 | 5.8 | 1.47 | 3.22 | 5% |
| Example 5 | NCM-4 | 3.7 | 4.2 | 0.65 | 90% | 3.76 | LFP/C | 100% | 350 | 5.8 | 1.47 | 3.22 | 1% |
| Example 6 | NCM-4 | 3.7 | 4.2 | 0.65 | 90% | 3.76 | LFP/C | 100% | 350 | 5.8 | 1.47 | 3.22 | 30% |
| Example 7 | NCM-4 | 3.7 | 4.2 | 0.65 | 90% | 3.76 | LFP/C | 100% | 350 | 5.8 | 1.47 | 3.22 | 15% |
| Example 8 | NCM-1 | 3.7 | 4.2 | 0.65 | 90% | 3.77 | LFP/C | 100% | 350 | 5.8 | 1.47 | 3.22 | 5% |
| Example 9 | NCM-2 | 3.7 | 4.2 | 0.65 | 90% | 3.75 | LFP/C | 100% | 350 | 5.8 | 1.47 | 3.22 | 5% |
| Example 10 | NCM-3 | 3.7 | 4.2 | 0.65 | 90% | 3.75 | LFP/C | 100% | 350 | 5.8 | 1.47 | 3.22 | 5% |

| Number | First material | | | | | | Second material | | | | | | W |
| --- | --- | --- | --- | --- | --- | --- | --- | --- | --- | --- | --- | --- | --- |
| | Type | Dv50 (µm) | Dv99/Dv10 | DN10 (µm) | Ratio of single particles | U1 (V) | Type | Ratio of secondary particles | Particle size of primary particles (nm) | Dv50 (µm) | Carbon content (wt%) | U2 (V) | |
| Example 11 | NCM-4 | 3.7 | 4.2 | 0.65 | 90% | 3.76 | LFP/C | 100% | 350 | 5.8 | 1.47 | 3.22 | 5% |
| Example 12 | NCM-4 | 3.7 | 4.2 | 0.65 | 90% | 3.76 | LFP/C | 100% | 350 | 5.8 | 1.47 | 3.22 | 1% |
| Example 13 | NCM-4 | 3.7 | 4.2 | 0.65 | 90% | 3.76 | LFP/C | 100% | 350 | 5.8 | 1.47 | 3.22 | 30% |
| Example 14 | NCM-4 | 3.7 | 4.2 | 0.65 | 90% | 3.76 | LFP/C | 100% | 350 | 5.8 | 1.47 | 3.22 | 15% |
| Example 15 | NCM-3 | 2 | 10 | 0.2 | 90% | 3.75 | LFP/C | 100% | 650 | 6.3 | 1.47 | 3.22 | 5% |
| Example 16 | NCM-3 | 3 | 7 | 0.5 | 90% | 3.75 | LFP/C | 100% | 500 | 7.2 | 1.47 | 3.22 | 5% |
| Example 17 | NCM-3 | 6 | 5 | 0.8 | 90% | 3.75 | LFP/C | 100% | 200 | 8.5 | 1.47 | 3.22 | 5% |
| Example 18 | NCM-3 | 15 | 4 | 3 | 40% | 3.75 | LFP/C | 100% | 30 | 9.1 | 1.47 | 3.22 | 5% |
| Example 19 | NCM-3 | 20 | 3 | 5 | 30% | 3.75 | LFP/C | 100% | 800 | 4.5 | 1.47 | 3.22 | 5% |

**Table 1 (continued)**

| Number | First material | | | | | | Second material | | | | | | W |
| | Type | $D_V50$ (μm) | $D_V99/D_V10$ | $D_N10$ (μm) | Ratio of single particles | U1 (V) | Type | Ratio of secondary particles | Particle size of primary particles (nm) | $D_V50$ (μm) | Carbon content (wt%) | U2 (V) | |
|---|---|---|---|---|---|---|---|---|---|---|---|---|---|
| Example 20 | NCM-3 | 3.7 | 4.2 | 0.65 | 80% | 3.75 | LFP/C | 100% | 350 | 5.8 | 1.47 | 3.22 | 5% |
| Example 21 | NCM-3 | 3.7 | 4.2 | 0.65 | 70% | 3.75 | LFP/C | 100% | 350 | 5.8 | 1.47 | 3.22 | 5% |
| Example 22 | NCM-3 | 3.7 | 4.2 | 0.65 | 90% | 3.75 | LFP/C | 100% | 350 | 5.8 | 0.80 | 3.22 | 5% |
| Example 23 | NCM-3 | 3.7 | 4.2 | 0.65 | 90% | 3.75 | LFP/C | 100% | 350 | 5.8 | 1.53 | 3.22 | 5% |
| Example 24 | NCM-3 | 3.7 | 4.2 | 0.65 | 90% | 3.75 | LFP/C | 100% | 350 | 5.8 | 2.00 | 3.22 | 5% |
| Example 25 | NCM-3 | 3.7 | 4.2 | 0.65 | 90% | 3.75 | LMFP/C | 100% | 350 | 5.8 | 1.47 | 3.60 | 5% |
| Example 26 | NCM-3 | 3.7 | 4.2 | 0.65 | 90% | 3.75 | $LiMnPO_4$/C | 100% | 350 | 5.8 | 1.47 | 3.90 | 5% |
| Example 27 | NCA-1 | 3.7 | 4.2 | 0.65 | 90% | 3.75 | LFP/C | 100% | 350 | 5.8 | 1.47 | 3.22 | 5% |
| Example 28 | NCW-1 | 3.7 | 4.2 | 0.65 | 90% | 3.75 | LFP/C | 100% | 350 | 5.8 | 1.47 | 3.22 | 5% |
| Comparative Example 1 | NCM-3 | 3.7 | 4.2 | 0.65 | 90% | 3.75 | / | / | / | / | / | / | 0% |
| Comparative Example 2 | NCM-3 | 3.7 | 4.2 | 0.65 | 90% | 3.75 | / | / | / | / | / | / | 0% |
| Comparative Example 3 | NCM-3 | 3.7 | 4.2 | 0.65 | 90% | 3.75 | LFP/C | 0 | 350 | 1.1 | 1.3 | 3.22 | 5% |
| Comparative Example 4 | NCM-3 | 3.7 | 4.2 | 0.65 | 90% | 3.75 | LFP/C | 0 | 15 | 3.7 | 1.3 | 3.22 | 5% |

Table 1:

U1 represents a discharge platform voltage of the first material with respect to graphite (a discharge rate was 0.33C);

U2 represents a discharge platform voltage of the second material with respect to graphite (a discharge rate was 0.33C);

"/" indicates that such material is not added.

**Table 2**

| Number | DCR improvement ratio of battery at 5% SOC | | | Cycling swelling force growth rate at 25°C |
| --- | --- | --- | --- | --- |
| | Test temperature (°C) | Lower cut-off voltage (V) | DCR improvement ratio | |
| Example 1 | 25 | 2.8 | 91% | 120% |
| Example 2 | 25 | 2.8 | 63% | 98% |
| Example 3 | 25 | 2.8 | 72% | 109% |
| Example 4 | 25 | 2.8 | 79% | 105% |
| Example 5 | 25 | 2.5 | 41% | 122% |
| Example 6 | 25 | 2.5 | 107% | 68% |
| Example 7 | 25 | 2.5 | 93% | 90% |
| Example 8 | -20 | 2.1 | 165% | 120% |
| Example 9 | -20 | 2.1 | 126% | 98% |
| Example 10 | -20 | 2.1 | 138% | 109% |
| Example 11 | -20 | 2.1 | 149% | 105% |
| Example 12 | -20 | 2.0 | 62% | 122% |
| Example 13 | -20 | 2.0 | 213% | 68% |
| Example 14 | -20 | 2.0 | 191% | 90% |
| Example 15 | 25 | 2.8 | 61% | 104% |
| Example 16 | 25 | 2.8 | 69% | 107% |
| Example 17 | 25 | 2.8 | 68% | 112% |
| Example 18 | 25 | 2.8 | 64% | 115% |
| Example 19 | 25 | 2.8 | 62% | 121% |
| Example 20 | 25 | 2.8 | 61% | 101% |
| Example 21 | 25 | 2.8 | 60% | 92% |
| Example 22 | 25 | 2.8 | 59% | 100% |
| Example 23 | 25 | 2.8 | 65% | 111% |
| Example 24 | 25 | 2.8 | 62% | 114% |
| Example 25 | 25 | 2.8 | 65% | 113% |
| Example 26 | 25 | 2.8 | 67% | 111% |
| Example 27 | 25 | 2.8 | 64% | 108% |
| Example 28 | 25 | 2.8 | 62% | 106% |
| Comparative Example 1 | 25 | 2.8 | 0% | 142% |
| Comparative Example 2 | -20 | 2.0 | 0% | 142% |
| Comparative Example 3 | 25 | 2.8 | 39% | 107% |
| Comparative Example 4 | 25 | 2.8 | 43% | 116% |

It can be seen from the results in table that in the secondary battery in the embodiments of in this application, the positive electrode plate included the first material, and the first material contained the lithium transition metal oxide. In addition, the positive electrode plate was also combined with the second material, the second material contained lithium transition metal phosphate, the lithium transition metal phosphate included secondary particles, the second material had a lower discharge platform voltage than the first material, and therefore, the direct current internal resistance of the battery could be greatly increased under higher energy density of the battery, and particularly, the direct current internal resistance of the battery at low temperature or a low SOC is more obviously increased. The battery could also have a lower cycling swelling force change rate.

The secondary batteries in Comparative Examples 1 to 4 did not meet a condition of this application, and had relatively large direct current internal resistance.

**Claims**

1. A secondary battery (5), comprising a positive electrode plate, wherein the positive electrode plate comprises a positive electrode current collector and a positive electrode film layer that is disposed on the positive electrode current collector and that comprises a positive electrode active material, wherein

   the positive electrode active material comprises a first material and a second material, the first material contains lithium transition metal oxide, the second material contains lithium transition metal phosphate, the lithium transition metal phosphate comprises secondary particles formed by agglomeration of primary particles, and the second material has a lower discharge platform voltage than the first material with respect to a same type of counter electrode, wherein
   a median particle size by volume $D_v50$ of the second material, when determined as described in the application, ranges from 4 $\mu$m to 10 $\mu$m.

2. The secondary battery (5) according to claim 1, wherein a particle size of the primary particles, when determined as described in the application, ranges from 30 nm to 800 nm, optionally from 200 nm to 650 nm, and further optionally, from 350 nm to 500 nm; or
   a median particle size by volume $D_v50$ of the second material, when determined as described in the application, ranges from 5 $\mu$m to 9 $\mu$m.

3. The secondary battery (5) according to claim 1 or 2, wherein the first material has a discharge platform voltage, when determined as described in the application, ranging from 3.5 V to 4.2 V and optionally a discharge platform voltage, when determined as described in the application, ranging from 3.6 V to 3.8 V in a discharge curve at a discharge rate of 0.33C with respect to graphite; or
   the second material has a discharge platform voltage, when determined as described in the application, ranging from 3.0 V to 4.0 V, optionally a discharge platform voltage ranging from 3.2 V to 3.7 V, and further optionally a discharge platform voltag, when determined as described in the application,e ranging from 3.2 V to 3.5 V in a discharge curve at a discharge rate of 0.33C with respect to graphite.

4. The secondary battery (5) according to any one of the preceding claims, wherein the lithium transition metal phosphate is selected from one or more of $LiFePO_4$, $LiMnPO_4$, $LiMn_{1-z}Fe_zPO_4$, $Li_3V_2(PO_4)_3$, and their modified materials, and optionally comprises one or more of $LiFePO_4$, $LiMn_{1-z}Fe_zPO_4$, wherein $0 < z < 1$, and optionally $0.05 \leq z \leq 0.5$.

5. The secondary battery (5) according to any one of the preceding claims, wherein the second material comprises a composite material of the lithium transition metal phosphate and carbon, and a mass ratio of carbon in the composite material ranges from 0.8% to 2.0%, optionally from 1.0% to 1.7%, and further optionally from 1.4% to 1.6%.

6. The secondary battery (5) according to any one of the preceding claims, wherein the lithium transition metal oxide is selected from one or more of lithium transition metal oxides expressed by formula (I);

$$Li_{1+x}Ni_aCo_bM_{1-a-b}O_{2-y}A_y \qquad (I)$$

wherein $-0.1 \leq x \leq 0.2$, $0.5 \leq a < 0.95$, $0 < b < 0.2$, $0 < a + b < 1$, and $0 \leq y < 0.2$, M is selected from one or more of Mn, Fe, Cr, Ti, Zn, V, Al, W, Mg, B, Cu, Y, Si, Sr, Zr, and Ce, and A is selected from one or more of S, F, Cl, $PO_4^{3-}$, and I; and optionally, $0.5 \leq a \leq 0.7$ and $0.01 \leq b \leq 0.15$.

7. The secondary battery (5) according to any one of the preceding claims, wherein a median particle size by volume Dv50 of the first material, when determined as described in the application, ranges from 0.5 $\mu$m to 20 $\mu$m, optionally from 2 $\mu$m to 15 $\mu$m, and further optionally, from 3 $\mu$m to 6 $\mu$m.

8. The secondary battery (5) according to any one of the preceding claims, wherein particle sizes by volume Dv99 and $D_V10$ of the first material, when determined as described in the application, satisfy $1 \leq D_V99/D_V10 \leq 10$, and optionally, $3 \leq D_V99/D_V10 \leq 7$.

9. The secondary battery (5) according to any one of the preceding claims, wherein a pH value of the first material, when determined as described in the application, ranges from 9 to 13, and optionally, from 10 to 12.

10. A preparation method of a secondary battery (5), comprising the following steps for preparing a positive electrode plate:

    providing a positive electrode active material, wherein the positive electrode active material comprises a first material and a second material, the first material contains lithium transition metal oxide, the second material contains lithium transition metal phosphate, the lithium transition metal phosphate comprises secondary particles formed by agglomeration of primary particles, and the second material has a lower discharge platform voltage than the first material with respect to a same type of counter electrode;
    forming the positive electrode active material into a positive electrode slurry; and
    applying the positive electrode slurry onto a positive electrode current collector to form a positive electrode film layer, to obtain the positive electrode plate;
    wherein a median particle size by volume $D_V50$ of the second material, when determined as described in the application, ranges from 4 $\mu$m to 10 $\mu$m.

11. A battery module (4), comprising the secondary battery (5) according to any one of claims 1 to 9.

12. A battery pack (1), comprising the secondary battery (5) according to any one of claims 1 to 9, or the battery module (4) according to claim 11.

13. An apparatus, comprising the secondary battery (5) according to any one of claims 1 to 9, the battery module (4) according to claim 11, or the battery pack (1) according to claim 12, wherein the secondary battery (5), the battery module (4), or the battery pack (1) is configured to provide power for the apparatus or used as an energy storage unit of the apparatus.

**Patentansprüche**

1. Sekundärbatterie (5) mit einer positiven Elektrodenplatte, wobei die positive Elektrodenplatte einen positiven Elektrodenstromkollektor und eine positive Elektrodenfilmschicht aufweist, die auf dem positiven Elektrodenstromkollektor angeordnet ist und ein positives Elektrodenaktivmaterial aufweist,

    das positive Elektrodenaktivmaterial ein erstes Material und ein zweites Material aufweist, wobei das erste Material ein lithiumhaltiges Übergangsmetalloxid enthält, das zweite Material ein lithiumhaltiges Übergangsmetallphosphat enthält, wobei das lithiumhaltige Übergangsmetallphosphat Sekundärteilchen umfasst, die durch Agglomeration von Primärteilchen gebildet werden, und das zweite Material eine niedrigere Entladungsplattformspannung als das erste Material im Vergleich zu einem gleichen Typ von Gegenelektrode aufweist, eine mediane Teilchengröße pro Volumen $D_V50$ des zweiten Materials, die wie in der Anmeldung beschrieben bestimmt wird, im Bereich von 4 $\mu$m bis 10 $\mu$m liegt.

2. Sekundärbatterie (5) nach Anspruch 1, wobei eine Größe der Primärteilchen, die wie in der Anmeldung beschrieben bestimmt wird, zwischen 30 nm und 800 nm, optional zwischen 200 nm und 650 nm, und ferner optional zwischen 350 nm und 500 nm liegt; oder eine mediane Teilchengröße pro Volumen $D_V50$ des zweiten Materials, die wie in der Anmeldung beschrieben bestimmt wird, zwischen 5 $\mu$m und 9 $\mu$m liegt.

3. Sekundärbatterie (5) nach Anspruch 1 oder 2, wobei das erste Material eine Entladeplattformspannung, die wie in der Anmeldung beschrieben bestimmt wird, zwischen 3,5 V und 4,2 V und optional eine Entladeplattformspannung, die wie in der Anmeldung beschrieben bestimmt wird, zwischen 3,6 V und 3,8 V in einer Entladekurve bei einer Entladerate von 0,33C in Bezug auf Graphit aufweist; oder

das zweite Material eine Entladungsplattformspannung, die wie in der Anmeldung beschrieben bestimmt wird, zwischen 3,0 V und 4,0 V, optional eine Entladungsplattformspannung zwischen 3,2 V und 3,7 V, und ferner optional eine Entladungsplattformspannung, die wie in der Anmeldung beschrieben bestimmt wird, zwischen 3,2 V und 3,5 V in einer Entladungskurve bei einer Entladungsrate von 0,33C in Bezug auf Graphit aufweist.

4. Sekundärbatterie (5) nach einem der vorstehenden Ansprüche, wobei das lithiumhaltige Übergangsmetallphosphat ausgewählt ist aus einer oder mehreren Verbindungen aus der Gruppe bestehend aus $LiFePO_4$, $LiMnPO_4$, $LiMn_{1-z}Fe_zPO_4$, $Li_3V_2(PO_4)_3$ und modifizierten Materialien davon, und optional eine oder mehrere Verbindungen aus $LiFePO_4$ und $LiMn_{1-z}Fe_zPO_4$ umfasst, wobei $0 < z < 1$, und optional $0,05 \leq z \leq 0,5$.

5. Sekundärbatterie (5) nach einem der vorstehenden Ansprüche, wobei das zweite Material ein Verbundmaterial aus dem lithiumhaltigen Übergangsmetallphosphat und Kohlenstoff umfasst und ein Massenverhältnis des Kohlenstoffs in dem Verbundmaterial zwischen 0,8 % und 2,0 %, optional zwischen 1,0 % und 1,7 %, und ferner optional zwischen 1,4 % und 1,6 % liegt.

6. Sekundärbatterie (5) nach einem der vorstehenden Ansprüche, wobei das lithiumhaltige Übergangsmetalloxid aus einem oder mehreren lithiumhaltigen Übergangsmetalloxiden ausgewählt ist, die durch die Formel (I) ausgedrückt werden:

$$Li_{1+x}Ni_aC_{Ob}M_{1-a-b}O_{2-y}A_y \qquad (I)$$

wobei $-0,1 \leq x \leq 0,2$, $0,5 \leq a < 0,95$, $0 < b < 0,2$, $0 < a + b < 1$ und $0 \leq y < 0,2$, M ausgewählt ist aus einem oder mehreren Elementen der Gruppe bestehend aus Mn, Fe, Cr, Ti, Zn, V, Al, W, Mg, B, Cu, Y, Si, Sr, Zr und Ce, und A ausgewählt ist aus einem oder mehreren Elementen der Gruppe bestehend aus S, F, Cl, $PO_4^{3-}$ und I; und optional $0,5 \leq a \leq 0,7$ und $0,01 \leq b \leq 0,15$.

7. Sekundärbatterie (5) nach einem der vorstehenden Ansprüche, wobei eine mediane Teilchengröße pro Volumen Dv50 des ersten Materials, die wie in der Anmeldung beschrieben bestimmt wird, zwischen 0,5 $\mu$m und 20 $\mu$m, optional zwischen 2 $\mu$m und 15 $\mu$m und optional weiter zwischen 3 $\mu$m und 6 $\mu$m liegt.

8. Sekundärbatterie (5) nach einem der vorstehenden Ansprüche, wobei die wie in der Anmeldung beschrieben bestimmten Teilchengrößen pro Volumen Dv99 und Dv10 des ersten Materials der Ungleichung $1 \leq Dv99/Dv10 \leq 10$, und optional $3 \leq Dv99/Dv10 \leq 7$ genügen.

9. Sekundärbatterie (5) nach einem der vorstehenden Ansprüche, wobei ein pH-Wert des ersten Materials, der wie in der Anmeldung beschrieben bestimmt wird, zwischen 9 und 13 und optional zwischen 10 und 12 liegt.

10. Verfahren zum Herstellen einer Sekundärbatterie (5), wobei das Verfahren die folgenden Schritte umfasst, um eine positive Elektrodenplatte herzustellen:

Bereitstellen eines positiven Elektrodenaktivmaterials, wobei das positive Elektrodenaktivmaterial ein erstes Material und ein zweites Material aufweist, wobei das erste Material ein lithiumhaltiges Übergangsmetalloxid enthält, das zweite Material ein lithiumhaltiges Übergangsmetallphosphat enthält, wobei das lithiumhaltige Übergangsmetallphosphat sekundäre Teilchen umfasst, die durch Agglomeration primärer Teilchen gebildet werden, und das zweite Material eine niedrigere Entladungsplattformspannung als das erste Material im Vergleich zu einem gleichen Typ einer Gegenelektrode aufweist;
Bilden des positiven Elektrodenaktivmaterials in eine Suspension der positiven Elektrode; und
Aufbringen der Suspension der positiven Elektrode auf einen Stromkollektor der positiven Elektrode, um eine Filmschicht der positiven Elektrode zu bilden, um die positive Elektrodenplatte zu erhalten;
wobei eine mediane Teilchengröße pro Volumen $D_v50$ des zweiten Materials, die wie in der Anmeldung beschrieben bestimmt wird, im Bereich von 4 $\mu$m bis 10 $\mu$m liegt.

11. Batteriemodul (4), das die Sekundärbatterie (5) nach einem der Ansprüche 1 bis 9 aufweist.

12. Batteriepack (1), aufweisend die Sekundärbatterie (5) nach einem der Ansprüche 1 bis 9 oder das Batteriemodul (4) nach Anspruch 11.

**13.** Vorrichtung mit der Sekundärbatterie (5) nach einem der Ansprüche 1 bis 9, dem Batteriemodul (4) nach Anspruch 11 oder dem Batteriepack (1) nach Anspruch 12, wobei die Sekundärbatterie (5), das Batteriemodul (4) oder der Batteriepack (1) eingerichtet ist, die Vorrichtung mit Energie zu versorgen, oder als Energiespeichereinheit für Vorrichtung verwendet wird.

**Revendications**

**1.** Batterie secondaire (5), comprenant une plaque-électrode positive, la plaque-électrode positive comprenant un collecteur de courant d'électrode positive et une couche de film d'électrode positive disposée sur le collecteur de courant d'électrode positive et comprenant une matière active d'électrode positive,

la matière active d'électrode positive comprenant une première matière et une seconde matière, la première matière contenant un oxyde de métal de transition lithié, la seconde matière contenant un phosphate de métal de transition lithié, le phosphate de métal de transition lithié comprenant des particules secondaires formées par agglomération de particules primaires, et la seconde matière présentant une tension plateforme de décharge inférieure à celle de la première matière par rapport à un même type de contre-électrode,
une taille médiane des particules par volume $D_v50$ de la seconde matière, déterminée tel que décrit dans la demande, étant comprise entre 4 $\mu$m et 10 $\mu$m.

**2.** La batterie secondaire (5) selon la revendication 1, dans laquelle une taille des particules primaires, déterminée tel que décrit dans la demande, est comprise entre 30 nm et 800 nm, optionnellement entre 200 nm et 650 nm, et optionnellement encore entre 350 nm et 500 nm ; ou
une taille médiane des particules par volume $D_v50$ de la seconde matière, déterminée tel que décrit dans la demande, est comprise entre 5 $\mu$m et 9 $\mu$m.

**3.** La batterie secondaire (5) selon les revendications 1 ou 2, dans laquelle la première matière présente une tension plateforme de décharge, déterminée tel que décrit dans la demande, comprise entre 3,5 V et 4,2 V, et optionnellement une tension plateforme de décharge, déterminée tel que décrit dans la demande, comprise entre 3,6 V et 3,8 V dans une courbe de décharge à un taux de décharge de 0,33C par rapport au graphite ; ou
la seconde matière présente une tension plateforme de décharge, déterminée tel que décrit dans la demande, comprise entre 3,0 V et 4,0 V, optionnellement une tension plateforme de décharge comprise entre 3,2 V et 3,7 V, et optionnellement encore une tension plateforme de décharge, déterminée tel que décrit dans la demande, comprise entre 3,2 V et 3,5 V dans une courbe de décharge à un taux de décharge de 0,33C par rapport au graphite.

**4.** La batterie secondaire (5) selon l'une quelconque des revendications précédentes, dans laquelle le phosphate de métal de transition lithié est choisi parmi un ou plusieurs composés du groupe comprenant le $LiFePO_4$, le $LiMnPO_4$, le $LiMn_{1-z}Fe_zPO_4$, le $Li_3V_2(PO_4)_3$ et leurs matières modifiées, et comprend optionnellement un ou plusieurs composés parmi le $LiFePO_4$ et le $LiMn_{1-z}Fe_zPO_4$, où $0 < z < 1$, et optionnellement $0,05 \leq z \leq 0,5$.

**5.** La batterie secondaire (5) selon l'une quelconque des revendications précédentes, dans laquelle la seconde matière comprend une matière composite du phosphate de métal de transition lithié et de carbone, et un rapport de masse du carbone dans la matière composite est compris entre 0,8 % et 2,0 %, optionnellement entre 1,0 % et 1,7 %, et optionnellement encore entre 1,4 % et 1,6 %.

**6.** La batterie secondaire (5) selon l'une quelconque des revendications précédentes, dans laquelle l'oxyde de métal de transition lithié est choisi parmi un ou plusieurs oxydes de métal de transition lithiés exprimés par la formule (I) :

$$Li_{1+x}Ni_aCO_bM_{1-a-b}O_{2-y}A_y \qquad (I)$$

dans laquelle $-0,1 \leq x \leq 0,2$, $0,5 \leq a < 0,95$, $0 < b < 0,2$, $0 < a + b < 1$ et $0 \leq y < 0,2$, M est choisi parmi un ou plusieurs éléments du groupe comprenant Mn, Fe, Cr, Ti, Zn, V, Al, W, Mg, B, Cu, Y, Si, Sr, Zr et Ce, et A est choisi parmi un ou plusieurs éléments du groupe comprenant S, F, Cl, $PO_4^{3-}$ et I ; et, optionnellement, $0,5 \leq a \leq 0,7$ et $0,01 \leq b \leq 0,15$.

**7.** La batterie secondaire (5) selon l'une quelconque des revendications précédentes, dans laquelle une taille médiane des particules par volume $Dv50$ de la première matière, déterminée tel que décrit dans la demande, est comprise entre 0,5 $\mu$m et 20 $\mu$m, optionnellement entre 2 $\mu$m et 15 $\mu$m, et optionnellement encore entre 3 $\mu$m et 6 $\mu$m.

8. La batterie secondaire (5) selon l'une quelconque des revendications précédentes, dans laquelle les tailles des particules par volume Dv99 et $D_V10$ de la première matière, déterminées tel que décrit dans la demande, satisfont à l'inégalité $1 \leq D_V99/D_V10 \leq 10$, et optionnellement $3 \leq D_V99/D_V10 \leq 7$.

9. La batterie secondaire (5) selon l'une quelconque des revendications précédentes, dans laquelle une valeur de pH de la première matière, déterminée tel que décrit dans la demande, est comprise entre 9 et 13, et optionnellement entre 10 et 12.

10. Procédé de préparation d'une batterie secondaire (5), le procédé comprenant les étapes suivantes permettant de préparer une plaque-électrode positive :

l'utilisation d'une matière active d'électrode positive, la matière active d'électrode positive comprenant une première matière et une seconde matière, la première matière contenant un oxyde de métal de transition lithié, la seconde matière contenant un phosphate de métal de transition lithié, le phosphate de métal de transition lithié comprenant des particules secondaires formées par agglomération de particules primaires, et la seconde matière présentant une tension plateforme de décharge inférieure à celle de la première matière par rapport à un même type de contre-électrode ;
la mise en forme de la matière active d'électrode positive comme une suspension d'électrode positive ; et
l'application de la suspension d'électrode positive sur un collecteur de courant d'électrode positive, afin de former une couche de film d'électrode positive, en vue d'obtenir la plaque-électrode positive ;
dans lequel une taille médiane des particules par volume $D_V50$ de la seconde matière, déterminée tel que décrit dans la demande, est comprise entre 4 $\mu$m et 10 $\mu$m.

11. Module (4) de batterie, comprenant la batterie secondaire (5) selon l'une quelconque des revendications 1 à 9.

12. Bloc-batterie (1), comprenant la batterie secondaire (5) selon l'une quelconque des revendications 1 à 9, ou le module (4) de batterie selon la revendication 11.

13. Appareil comprenant la batterie secondaire (5) selon l'une quelconque des revendications 1 à 9, le module (4) de batterie selon la revendication 11 ou le bloc-batterie (1) selon la revendication 12, dans lequel la batterie secondaire (5), le module (4) de batterie ou le bloc-batterie (1) est conçu pour alimenter en énergie l'appareil ou utilisé en tant qu'unité de stockage d'énergie de l'appareil.

**5**

FIG. 1

5

53

52
52

51

FIG. 2

**4**    5    5

5

FIG. 3

1

FIG. 4

1

2

4 4 4

4

4

4

3

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9306214 B2